# EUROPÄISCHE PATENTSCHRIFT

(11) **EP 2 183 138 B1**
(45) Veröffentlichungstag und Bekanntmachung des Hinweises auf die Patenterteilung: **15.06.2011**
(21) Anmeldenummer: 08787030.9
(22) Anmeldetag: 08.08.2008
(51) Int. Cl.: B60W 10/08, B60W 20/00, B60W 10/02

(54) **VERFAHREN ZUM STEUERN UND/ODER REGELN EINER HYBRIDANTRIEBSANORDNUNG**
METHOD FOR CONTROLLING AND/OR REGULATING A HYBRID DRIVE ARRANGEMENT
PROCÉDÉ DE COMMANDE ET/OU DE RÉGULATION D'UN DISPOSITIF D'ENTRAÎNEMENT HYBRIDE

(30) Priorität: 01.09.2007 DE 102007041569
(43) Veröffentlichungstag der Anmeldung: 12.05.2010
(73) Patentinhaber: ZF Friedrichshafen AG, 88038 Friedrichshafen (DE)
(72) Erfinder: KALTENBACH, Johannes, 88048 Friedrichshafen (DE); WALLNER, Stefan, 6900 Bregenz (AT)
(86) Internationale Anmeldenummer: PCT/EP2008/060434
(87) Internationale Veröffentlichungsnummer: WO 2009/027201

(56) Entgegenhaltungen:
- EP-A- 1 219 493
- WO-A-02/086343
- WO-A-03/066367
- WO-A-2006/053624
- US-A1- 2006 199 696

## Beschreibung

Die vorliegende Erfindung betrifft ein Verfahren zum Steuern und/oder Regeln einer Hybridantriebsanordnung für ein Fahrzeug der im Oberbegriff des Patentanspruches 1 näher definierten Art.

Aus der Fahrzeugtechnik sind Hybridantriebsanordnungen für Fahrzeuge bekannt. Bei der bekannten Hybridantriebsanordnung umfasst der Antriebsstrang des Fahrzeuges einen Verbrennungsmotor, der über eine Kupplung mit einer Eingangswelle eines Getriebes mit variabler Übersetzung koppelbar ist. Ferner ist der Eingangswelle zumindest eine elektrische Maschine zugeordnet, welche zwischen einem generatorischen oder motorischen Betrieb umschaltbar ist.

Demzufolge kann die Elektromaschine im motorischen Betrieb zum Antrieb des Fahrzeuges und im generatorischen Betrieb zum Aufladen eines Energiespeichers verwendet werden. Beim motorischen Betrieb kann der Energiespeicher die notwendige Energie zum Betrieb der Elektromaschine liefern. Zum Aufladen des Energiespeichers wird die sich im generatorischen Betrieb befindliche Elektromaschine durch den Verbrennungsmotor angetrieben.

Nach sehr langen Stillstandszeiten oder nach einem längeren Werkstattaufenthalt des Fahrzeuges sind die Energiespeicher vollständig entladen und nicht mehr betriebsbereit. Um die Energiespeicher wieder betriebsbereit zu machen, ist es somit erforderlich diese wieder aufzuladen. Üblicherweise wird der Energiespeicher in der Werkstatt mit einem Ladegerät wieder geladen. Dazu ist in nachteiliger Weise eine externe Energiequelle erforderlich.

In dem gattungsbildenden Dokument WO 2006/053624 A ist ein Verfahren zur Steuerung eines Betriebes eines Kraftfahrzeugs mit einer Hybridantriebsanordnung angegeben, welche einen Verbrennungsmotor sowie eine wahlweise motorisch oder generatorisch betreibbare elektrische Maschine umfasst, wobei die elektrische Maschine im generatorischen Betrieb einen Energiespeicher lädt. Der Verbrennungsmotor betreibt dabei die E-Maschine mit einem konstanten Moment. Die Motordrehzahl befindet sich hierbei in einem festen, durch das Wirkungsgradkennfeld der E-Maschine festgelegten Bereich.

In der WO 02/086343 A und der WO 03/066367 A sind eine Drehzahlregelung des Verbrennungsmotors mittels einer Kupplung angegeben. Gemäß der WO 03/066367 A wird geregelt, wenn die Motordrehzahl unter einen festgelegten Schwellenwert fällt, während bei der WO 02/086343 A die Regelung mittels der Kupplung bei Überschreiten eines bestimmten Schwellenwerts erfolgt.

Der Erfindung liegt die Aufgabe zu Grunde, ein Verfahren der eingangs beschriebenen Gattung vorzuschlagen, mit welchem eine Kupplungssteuerung ermöglicht wird, die zeitlich nicht begrenzt ist.

Diese Aufgabe wird erfindungsgemäß durch die Merkmale des Patentanspruches 1 gelöst.

Demnach wird ein Verfahren zum Steuern und/oder Regeln einer Hybridantriebsanordnung für ein Fahrzeug mit zumindest einem Verbrennungsmotor und zumindest einer Elektromaschine vorgeschlagen, welche über wenigstens eine Kupplung mit der Eingangswelle eines automatisierten Getriebes zum Antrieb des Fahrzeuges zumindest zeitweise gekoppelt werden, wobei zumindest ein Energiespeicher durch die vom Verbrennungsmotor generatorisch betriebene Elektromaschine geladen wird und wobei bei einer permanent erregten Synchronmaschine als Elektromaschine eine Solldrehzahl unterhalb einer Eckdrehzahl beim Ladevorgang vorgegeben wird.

Auf diese Weise kann ein völlig entladener Energiespeicher ohne zusätzliche externe Energie geladen werden, indem die Solldrehzahl innerhalb eines Grunddrehzahlbereiches, also unterhalb der Knickdrehzahl beziehungsweise der Eckdrehzahl der Synchronmaschine, gehalten wird. Beispielsweise kann der Verbrennungsmotor des Fahrzeuges mit Hilfe eines konventionellen Anlassers gestartet werden. Die Kupplung wird geschlossen und der Verbrennungsmotor kann die im generatorischen Betrieb befindliche Elektromaschine antreiben, um mit dem Ladevorgang des Energiespeichers zu beginnen. Dadurch, dass die Solldrehzahl unterhalb der Eckdrehzahl legt, wird für die üblicherweise vorgesehene Feldschwächung keine Energie benötigt. Infolgedessen ist ein Aufladen des leeren Energiespeichers ohne fremde Hilfe bei dem Fahrzeug möglich, so dass ein autarkes System realisiert wird.

Für die Drehzahlregelung bei einem Ladevorgang wird die Kupplungssteuerung zur Ansteuerung der Solldrehzahl beim Ladevorgang verwendet. Somit kann der gewünschte Drehzahlbereich beim Laden gehalten werden. Das Laden des Energiespeichers erfolgt somit drehzahlgeregelt mit der Synchronmaschine, welches regelungstechnisch einfach und stabil realisierbar ist.

Gemäß der Erfindung wird die Kupplung mit der Kupplungssteuerung im Schlupfbereich betrieben, um die Solldrehzahl der Synchronmaschiene in dem Grunddrehzahlbereich zu halten. Dies ist erforderlich, da üblicherweise die Leerlaufdrehzahl des Verbrennungsmotors oberhalb der üblicherweise bei 300 bis 400 Umdrehungen/Minute liegenden Eckdrehzahl liegt. Auf diese Weise wird der Kupplung gesteuert ein entsprechendes Moment vorgegeben, damit die Drehzahl der Synchronmaschine beim Laden des Energiespeichers unterhalb der Eckdrehzahl gehalten wird.

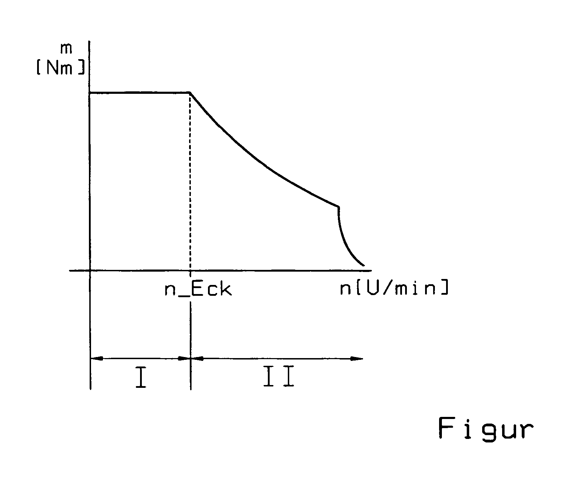

Nachfolgend wird die Erfindung anhand der Zeichnung näher erläutert. Die einzige Figur der Erfindung zeigt ein Diagramm mit einem Drehmomentverlauf über der Drehzahl einer permanent erregten Synchronmaschine.

Aus dem Diagramm wird deutlich, dass die permanent erregte Synchronmaschine zunächst einen konstanten Verlauf des Drehmomentes m bis zu einer Eckdrehzahl beziehungsweise Knickdrehzahl n_Eck aufweist. Der Abschnitt in dem der konstante Verlauf des Drehmomentes m vorliegt, wird als Grunddrehzahlbereich I bezeichnet. Danach fällt das Drehmoment m kontinuierlich ab. Dieser Bereich wird als Feldschwächbereich II der permanent erregten Synchronmaschine bezeichnet.

Um die permanent erregte Synchronmaschine im Feldschwächbereich II zu betreiben, ist jedoch Energie erforderlich, um die Feldschwächung zu realisieren. Deshalb wird bei vollständig entladenem Energiespeicher vorgeschlagen, dass der Ladevorgang im Bereich des Grunddrehzahlbereiches I erfolgt, so dass keine zusätzliche externe Energie notwendig ist. Dies wird durch das erfindungsgemäße Verfahren dadurch realisiert, dass die permanent erregte Synchronmaschine drehzahlgeregelt mit einer Solldrehzahl unterhalb der Eckdrehzahl n_Eck beim Laden des Energiespeichers betrieben wird.

### Bezugszeichen

- m: Drehmoment der Synchronmaschine
- n: Drehzahl der Synchronmaschine
- n_Eck: Eckdrehzahl der Synchronmaschine
- I: Grunddrehzahlbereich
- II: Feldschwächbereich

## Patentansprüche

1. Verfahren zum Steuern und/oder Regeln einer Hybridantriebsanordnung für ein Fahrzeug, mit zumindest einem Verbrennungsmotor und zumindest einer Elektromaschine, welche über wenigstens eine Kupplung mit der Eingangswelle eines automatisierten Getriebes zum Antrieb eines Fahrzeuges zumindest zeitweise gekoppelt werden, wobei zumindest ein Energiespeicher durch die vom Verbrennungsmotor generatorisch betriebene Elektromaschine geladen wird, wobei bei einer permanent erregten Synchronmaschine als Elektromaschine eine Solldrehzahl unterhalb einer Eckdrehzahl (n_Eck) beim Ladevorgang vorgegeben wird, und die Kupplungssteuerung zur Ansteuerung der Solldrehzahl beim Ladevorgang verwendet wird, **dadurch gekennzeichnet, dass** die Kupplung mit der Kupplungssteuerung im Schlupfbereich betrieben wird, um die Solldrehzahl der Synchronmaschine in einem Grunddrehzahlbereich (I) interhalb der Eckdrehzahl (n_Eck) zu halten.

## Claims

1. Method for controlling and/or regulating a hybrid drive arrangement for a vehicle having at least one internal combustion engine and at least one electrical machine which are at least temporarily coupled via at least one clutch to the input shaft of an automated transmission for driving a vehicle, with at least one energy storage means being charged by the electrical machine which is operated in generator mode by the internal combustion engine, with a setpoint speed below a transition speed (n_Eck) being predefined during the charging process when the electrical machine is a permanent-magnet synchronous machine, and the clutch controller being used to control the setpoint speed during the charging process, **characterized in that** the clutch is operated in the slip region by the clutch controller in order to keep the setpoint speed of the synchronous machine in a basic speed range (I) below the transition speed (n_Eck).

## Revendications

1. Procédé de commande et/ou de régulation d'un agencement d'entraînement hybride pour un véhicule, comprenant au moins un moteur à combustion interne et au moins un moteur électrique, qui son accouplés au moins temporairement par le biais d'au moins un embrayage à l'arbre d'entrée d'une transmission automatisée pour l'entraînement d'un véhicule, au moins un accumulateur d'énergie étant chargé par le moteur électrique entraîné comme générateur par le moteur à combustion interne, un régime de consigne en dessous d'un régime seuil (n_Eck) étant prédéfini lors de l'opération de charge dans une machine synchrone excitée de manière permanente en tant que moteur électrique, et la commande d'embrayage étant utilisée pour la commande du régime de consigne lors de l'opération de charge, **caractérisé en ce que** l'embrayage est entraîné en mode de glissement par la commande d'embrayage afin de maintenir dans une plage de régime de base (I) en dessous du régime seuil (n_Eck), le régime de consigne de la machine synchrone.
